# EUROPÄISCHE PATENTSCHRIFT

(11) **EP 4 305 245 B1**
(45) Veröffentlichungstag und Bekanntmachung des Hinweises auf die Patenterteilung: **20.11.2024**
(21) Anmeldenummer: 22712377.5
(22) Anmeldetag: 10.03.2022
(51) Int. Cl.: E02D 27/42, E02D 27/52, E02D 27/50, E02D 31/00, E02D 15/08, E02D 5/22, E04H 7/22, F24F 7/02, F24F 13/20

(54) **ABDECKUNG EINER BAUTEILÖFFNUNG EINES BAUTEILS ALS PFAHL INSBESONDERE EINES OFFSHORE-BAUWERKS**
COVER FOR A COMPONENT OPENING OF A COMPONENT AS PILE, IN PARTICULAR AN OFFSHORE STRUCTURE
ÉLÉMENT DE RECOUVREMENT D'UNE OUVERTURE DE COMPOSANT EN TANT QUE PIEU, EN PARTICULIER D'UN OUVRAGE EN MER

(30) Priorität: 11.03.2021 DE 102021105973
(43) Veröffentlichungstag der Anmeldung: 17.01.2024
(73) Patentinhaber: RWE Offshore Wind GmbH, 45141 Essen (DE)
(72) Erfinder:
(74) Vertreter: Schwenderling, Jens
(86) Internationale Anmeldenummer: PCT/EP2022/056125
(87) Internationale Veröffentlichungsnummer: WO 2022/189544

(56) Entgegenhaltungen:
- EP-A1- 1 607 348
- EP-A1- 1 607 348
- WO-A1-2020/074421
- WO-A1-2020/074421
- WO-A1-2021/014052
- WO-A1-2021/014052
- CN-U- 204 498 825
- DE-U1- 202014 003 761
- DE-U1- 202014 003 761
- FR-A1- 2 695 157
- FR-A1- 2 695 157
- GB-A- 748 179
- GB-A- 748 179

## Beschreibung

Die Erfindung betrifft ein Verfahren zur Montage eines Offshore-Bauwerks, insbesondere einer Offshore-Windenergieanlage. Zudem betrifft die Erfindung eine Anordnung, welche ein hohles Bauteil als Pfahl mit einer Bauteilöffnung aufweist, insbesondere einen oben offenen Pfahl. Die Bauteilöffnung ist mit einer Abdeckung verschlossen, um das Bauteil zwischen Montageschritten vor äußeren Einflüssen zu schützen.

Offshore-Windenergieanlagen weisen üblicherweise einen hohlen Pfahl als Gründungsstruktur auf. Beispielsweise die WO 2020/074 421 A1 beschreibt eine Windkraftanlage mit einem Hohlstrukturelement. Zur Montage einer Offshore-Windenergieanlage wird der Pfahl zunächst im Meeresgrund verankert. Anschließend wird eine Turmstruktur auf dem Pfahl errichtet. Zwischen diesen beiden Schritten können in der Praxis mehrere Monate vergehen. Daher ist es üblich, den nach oben offenen Pfahl mit einer Abdeckung zu verschließen, bis die Turmstruktur errichtet wird. So wird der Innenraum des Pfahls vor äußeren Einflüssen geschützt. Unmittelbar bevor die Turmstruktur errichtet wird, wird die Abdeckung entfernt.

Als Abdeckungen für den beschriebenen Zweck sind einfache Planen bekannt, welche mit Spanngurten am Pfahl befestigt werden. Solche Abdeckungen sind allerdings oft schwer zu montieren, insbesondere bei starkem Wind. Zudem schließen diese Abdeckungen den Pfahl vollständig ab. Dadurch kann sich im Innenraum des Pfahls Schimmel bilden. Zudem ist der Zugang zum Innenraum des Pfahls durch die bekannten Abdeckungen erschwert, beispielsweise für Montagearbeiten darin. Insbesondere der sogenannte cable-pull-in wird durch eine solche Abdeckung erschwert.

Aus dem Stand der Technik sind verschiedene Abdeckungen von Öffnungen bekannt. Beispielsweise beschreibt die DE 2020 14 003 761 U1 ein nachträglich montierbares Dach eines oben offenen Bauwerks, beispielsweise einer Jauchegrube oder einer Biogasanlage. Die EP 1 607 348 A1 betrifft eine Abdeckung für einen Tank, der eine Behälterwand, ein Dach und gegebenenfalls aus dem Dach ragende Entlüftungsstutzen, Pumprohre, Druckmessgeräte, Geländerstangen oder dergleichen umfasst.

Die FR 2 695 157 A1 betrifft die Abdeckung von Gruben mit Planen. Die CN 204 498 825 U beschreibt ein hohles Bauteil mit einer Bauteilöffnung und einer Abdeckung dafür.

Auch in anderen Anwendungsgebieten kann es erforderlich sein, eine Bauteilöffnung eines hohlen Bauteils zu verschließen. Auch dabei stellen Schimmelbildung und mangelnde Zugänglichkeit bekannte Probleme dar.

Bauteile mit einem Hohlraum sind in verschiedenen Zusammenhängen bekannt. Aus der GB 748,179 A ist beispielsweise ein Silo für Zement bekannt. Aus der WO 2021/014 052 A1 ist ein Hohlpfahl bekannt.Aufgabe der vorliegenden Erfindung ist es, ausgehend vom beschriebenen Stand der Technik eine Abdeckung für die Bauteilöffnung eines hohlen Bauteils als Pfahl bereitzustellen, mit der Schimmelbildung verhindert und die Zugänglichkeit erleichtert wird.

Diese Aufgaben werden gelöst mit der Anordnung und dem Verfahren gemäß den unabhängigen Ansprüchen. Weitere vorteilhafte Ausgestaltungen sind in den abhängigen Ansprüchen angegeben. Erfindungsgemäß wird eine Anordnung vorgestellt, welche umfasst:
- ein hohles Bauteil als Pfahl mit einer Bauteilöffnung,
- eine Abdeckung, durch welche die Bauteilöffnung verschlossen ist,
- einen Lüfter zum Belüften eines Innenraums des Bauteils über eine Belüftungsöffnung in der Abdeckung, wobei der Lüfter schwenkbar an der Abdeckung befestigt ist.

Die Anordnung kann ein Zwischenprodukt sein, aus welchem ein Bauwerk erhalten werden kann. Die Abdeckung kann in dem Fall eine Bauteilöffnung des Bauteils vorübergehend verschließen. Die Abdeckung kann entfernt werden, wenn die Bauteilöffnung des Bauteils anderweitig und dauerhaft verschlossen wird, beispielsweise indem ein Anbauteil an dem Bauteil befestigt wird. Die Abdeckung kann also dazu dienen, während eines Bauprozesses eine Bauteilöffnung im Bauteil zu verschließen und den Innenraum so vor äußeren Einflüssen zu schützen. Das ist insbesondere dann von Vorteil, wenn eine elektrische Einrichtung im Innenraum installiert ist.

Das Bauwerk kann insbesondere eine Offshore-Windenergieanlage sein. In dem Fall kann die Abdeckung dazu dienen, einen im Meeresgrund verankerten und nach oben offenen Pfahl als das Bauteil vor äußeren Einflüssen zu schützen, bis die Turmstruktur auf dem Pfahl montiert wird. Ist die Turmstruktur montiert, ist die Bauteilöffnung an der Oberseite des Pfahls durch die Turmstruktur dauerhaft verschlossen, so dass die Abdeckung nicht mehr benötigt wird. Die Abdeckung kann zum einmaligen Gebrauch bestimmt sein. In dem Fall wird die Abdeckung entsorgt, wenn die Turmstruktur montiert wird. Denkbar ist aber auch, dass die Abdeckung ganz oder teilweise wiederverwendet wird. Alternativ kann die Abdeckung aber auch bei einem Zwischenprodukt für ein beliebiges anderes Bauwerk eingesetzt werden, um während eines Bauprozesses eine Bauteilöffnung temporär zu verschließen.

Alternativ kann die Anordnung auch ein fertiggestelltes Bauwerk sein. Die Abdeckung kann in dem Fall eine Bauteilöffnung dauerhaft oder temporär verschließen. Denkbar ist aber auch, dass bei einem beliebigen Bauwerk eine seitliche Bauteilöffnung durch die Abdeckung dauerhaft oder temporär verschlossen wird.

Die Anordnung umfasst ein hohles Bauteil als Pfahl. Das hohle Bauteil hat vorzugsweise einen runden Querschnitt, insbesondere einen kreisförmigen Querschnitt. Das Bauteil kann insbesondere rohrförmig ausgebildet sein. Das Bauteil ist vorzugsweise zylinderförmig. Das Bauteil weist vorzugsweise eine umlaufende Mantelwand auf. An seinen beiden Stirnseiten ist das Bauteil in dem Fall vorzugsweise offen. Die von der Abdeckung verschlossene Bauteilöffnung ist in dem Fall durch eine der beiden offenen Stirnseiten gebildet. Die Bauteilöffnung erstreckt sich vorzugsweise über die gesamte Stirnseite des Bauteils. Denkbar ist auch, dass die Bauteilöffnung seitlich am Bauteil angeordnet ist, insbesondere in einer Mantelwand.

Als Bauteilöffnung wird eine Öffnung im Bauteil bezeichnet. Die Bezeichnung Bauteilöffnung dient allein der sprachlichen Abgrenzung von anderen hierin beschriebenen Öffnungen, insbesondere von der Belüftungsöffnung.

Die Bauteilöffnung hat vorzugsweise eine Querschnittsfläche im Bereich von 1 bis 100 m², insbesondere im Bereich von 10 bis 50 m². Die Bauteilöffnung hat vorzugsweise einen kreisförmigen Querschnitt, insbesondere mit einem Durchmesser im Bereich von 1 bis 10 m.

Die Anordnung weist weiterhin die Abdeckung auf, mit der die Bauteilöffnung verschlossen ist. Darunter ist zu verstehen, dass die Abdeckung die Bauteilöffnung überdeckt und so den Innenraum vor äußeren Einflüssen schützt. Als äußere Einflüsse kommen Witterungseinflüsse wie Regen und Schnee in Betracht. Zudem kommt Vogelkot in Betracht. Im Falle einer Offshore-Windenergieanlage kommt zudem das Eindringen von Meerwasser bei hohem Wellengang in Betracht.

Es ist nicht erforderlich, dass die Abdeckung die Bauteilöffnung luftdicht abschließt. Um Schimmelbildung im Innenraum des Bauteils zu verhindern, ermöglicht die Abdeckung stattdessen sogar die Belüftung des Innenraums. Dazu weist die Anordnung einen Lüfter auf, welcher an der Abdeckung gehalten ist. Über den Lüfter wird Luft vorzugsweise von einer Umgebung der Anordnung durch die Belüftungsöffnung in der Abdeckung hindurch in den Innenraum des Bauteils geleitet. Denkbar ist auch, dass über den Lüfter Luft aus dem Innenraum des Bauteils durch die Belüftungsöffnung in der Abdeckung hindurch in die Umgebung der Anordnung geleitet wird. Im Folgenden wird beispielhaft auf den Fall eingegangen, dass Luft mit dem Lüfter in den Innenraum des Bauteils eingeleitet wird. Entsprechendes gilt für den umgekehrten Fall. Die Belüftungsöffnung hat vorzugsweise einen Durchmesser im Bereich von 20 bis 200 cm.

Zum Ausgleich des Drucks im Innenraum des Bauteils weist die Abdeckung vorzugsweise eine oder mehrere Druckausgleichsöffnungen auf. Durch diese kann Luft aus dem Innenraum des Bauteils entweichen, wenn Luft mit dem Lüfter in den Innenraum des Bauteils hinein befördert wird. Die Druckausgleichsöffnungen sind vorzugsweise derart angeordnet, dass über diese kein Wasser von außen in den Innenraum des Bauteils gelangen kann. Ein Querschnitt der Entlüftungsöffnungen beträgt in Summe vorzugsweise weniger als 10 % der Oberfläche der Abdeckung.

Die Luft kann mit dem Lüfter unmittelbar in den gesamten Innenraum des Bauteils eingeleitet werden. Alternativ kann an der Innenseite der Abdeckung ein Belüftungsschlauch an die Belüftungsöffnung anschließen. Über den Belüftungsschlauch kann die Luft innerhalb des Innenraums des Bauteils an einen gewünschten Ort geleitet werden. Der Belüftungsschlauch weist vorzugsweise eine Mantelwand aus Kunststoff mit einer darin integrierten Drahtspirale auf, welche der Mantelwand ihre Form gibt.

Der Lüfter ist schwenkbar an der Abdeckung gehalten. Das ist beispielsweise möglich, indem der Lüfter über ein oder mehrere Scharniere an der Abdeckung gehalten ist. Der Lüfter kann zwischen einer ersten Stellung und einer zweiten Stellung verschwenkt werden. In der ersten Stellung verdeckt der Lüfter die Belüftungsöffnung in der Abdeckung, sodass der Lüfter Luft durch die Belüftungsöffnung befördern kann. Dies ist die Betriebsstellung, in der der Lüfter zum Belüften des Innenraums des Bauteils eingesetzt werden kann. In der zweiten Stellung ist der Lüfter von der Belüftungsöffnung weggeschwenkt. Die Belüftungsöffnung ist also freigegeben. So kann die Belüftungsöffnung als Zugang zum Innenraum des Bauteils genutzt werden. Insoweit ermöglicht die beschriebene Anordnung einen besonders leichten Zugang zum Innenraum des Bauteils. Insbesondere ist dafür keine gesonderte Zugangsöffnung in der Abdeckung erforderlich. Nichtsdestotrotz kann die Abdeckung auch neben der Belüftungsöffnung eine oder mehrere Zugangsöffnungen aufweisen. Durch die Verschwenkbarkeit des Lüfters ist der Zugang zum Innenraum des Bauteils aber dennoch erleichtert, weil ohne die Verschwenkbarkeit des Lüfters am Ort der Belüftungsöffnung kein Zugang möglich wäre. Ist ein Belüftungsschlauch an die Belüftungsöffnung angebunden, kann dieser entfernt werden, wenn der Lüfter aus der Betriebsstellung in die zweite Stellung weggeschwenkt wird. So kann der Innenraum des Pfahls trotz Belüftungsschlauchs über die Belüftungsöffnung zugänglich gemacht werden.

Damit der Lüfter zugänglich ist, beispielsweise um den Lüfter verschwenken zu können, weist die Anordnung vorzugsweise eine Treppe auf. Die Treppe ist vorzugsweise außerhalb der Abdeckung angeordnet und erstreckt sich vorzugsweise zwischen dem Rand der Bauteilöffnung und dem Lüfter. Über die Treppe kann die Belüftungsöffnung bei weggeschwenktem Lüfter als Zugang zum Innenraum des Bauteils genutzt werden.

In einer bevorzugten Ausführungsform der Anordnung ist das Bauteil eine in einem Meeresgrund verankerte Gründungsstruktur für eines Offshore-Bauwerks.

Das Bauteil dient in dieser Ausführungsform als Fundament eines Offshore-Bauwerks, insbesondere einer Offshore-Windenergieanlage. Dazu ist das Bauteil einerseits im Meeresgrund verankert. Andererseits ragt das Bauteil bei normalem Wasserstand vorzugsweise aus dem Wasser heraus. Letzteres schließt nicht aus, dass das Wasser beispielsweise bei hohem Wellengang das Bauteil vollständig einschließen kann.

Das Offshore-Bauwerk umfasst neben dem Bauteil vorzugsweise weitere Elemente und insbesondere eine Bauteilstruktur. Im Falle einer Offshore-Windenergieanlage ist beispielsweise eine Turmstruktur eine solche Bauteilstruktur. Die Turmstruktur kann unmittelbar an dem Bauteil befestigt werde oder über ein Zwischenelement, insbesondere über ein sogenanntes Transition Piece.

In dieser Ausführungsform dient die Abdeckung vorzugsweise dazu, die Bauteilöffnung des Bauteils temporär zu verschließen. So kann die Abdeckung dazu dienen, den Innenraum des im Meeresgrund verankerten Bauteils zu schützen, bis die Turmstruktur montiert wird. Die Anordnung stellt in dem Fall ein Zwischenprodukt dar, aus dem ein Offshore-Bauwerk wie eine Offshore-Windenergieanlage erhalten werden kann. Die Abdeckung ist zwar Teil der Anordnung, nicht aber Teil des fertiggestellten Offshore-Bauwerks.

In einer weiteren bevorzugten Ausführungsform der Anordnung ist das Bauteil ein Pfahl, wobei die Bauteilöffnung an einer Stirnseite des Pfahls angeordnet ist.

Der Pfahl hat vorzugsweise eine geschlossene Mantelfläche. An den beiden Stirnseiten ist der Pfahl vorzugsweise offen. Insoweit ist an einer der beiden Stirnseiten die Bauteilöffnung gebildet, die von der Abdeckung verschlossen ist. Die Bauteilöffnung erstreckt sich vorzugsweise über den gesamten Querschnitt des Pfahls. Die Bauteilöffnung kann hier auch als Pfahlöffnung bezeichnet werden. Als Pfahlöffnung wird eine Öffnung im Pfahl bezeichnet. Die Bezeichnung Pfahlöffnung dient allein der sprachlichen Abgrenzung von anderen hierin beschriebenen Öffnungen, insbesondere von der Belüftungsöffnung.

Der Pfahl kann insbesondere als Gründungsstruktur für ein Offshore-Bauwerk ausgebildet sein, insbesondere für eine Offshore-Windenergieanlage. Im Falle einer Offshore-Windenergieanlage kann der Pfahl auch als Monopfahl bezeichnet werden. Der Pfahl kann in den Meeresgrund eingetrieben werden, beispielsweise durch Einrammen oder Einvibrieren. Da der Pfahl unten offen ist, kann dabei Material des Meeresgrunds in den Pfahl gelangen. Der Pfahl kann dadurch so weit mit Material gefüllt werden, dass der Meeresgrund innerhalb und außerhalb des Pfahls das gleiche Niveau hat. Der zu belüftende Innenraum des Pfahls erstreckt sich in dem Fall von dem Meeresgrund bis zu der mit der Abdeckung verschlossenen Bauteilöffnung.

In einer weiteren bevorzugten Ausführungsform der Anordnung ist der Lüfter in einer Betriebsstellung auf einer Achse der Bauteilöffnung angeordnet.

In der Betriebsstellung ist der Lüfter in dieser Ausführungsform in Bezug auf den Querschnitt der Bauteilöffnung mittig angeordnet. Ist die Bauteilöffnung an einer Stirnseite eines als Pfahl ausgebildeten Bauteils gebildet, fällt die Achse der Bauteilöffnung vorzugsweise mit einer Achse des Pfahls zusammen. In dem Fall verläuft auch die Achse des Pfahls durch den Lüfter, wenn sich dieser in der Betriebsstellung befindet.

Aufgrund der Schwenkbarkeit des Lüfters kann die Belüftungsöffnung freigegeben werden und als Zugang zum Innenraum des Bauteils genutzt werden. Die mittige Anordnung des Lüfters und folglich die mittige Anordnung der Belüftungsöffnung begünstigen die Zugänglichkeit des Innenraums. Von einer mittig angeordneten Belüftungsöffnung aus können alle Punkte des Innenraums vergleichsweise gut erreicht werden. Eine Achse der Belüftungsöffnung fällt vorzugsweise mit der Achse der zu verschließenden Bauteilöffnung zusammen.

In einer weiteren bevorzugten Ausführungsform der Anordnung weist die Abdeckung eine Ringplatte auf, an welcher der Lüfter gehalten ist.

Die Ringplatte ist insoweit ringförmig ausgebildet, als dass in der Mitte der Ringplatte die Belüftungsöffnung ausgebildet ist. Der Lüfter kann beispielsweise über ein oder mehrere Scharniere an der Ringplatte gehalten sein. Die Ringplatte kann zudem zur Stabilität der Abdeckung beitragen. Die Ringplatte hat vorzugsweise einen Außendurchmesser im Bereich von 50 bis 300 cm und einen Innendurchmesser im Bereich von 20 bis 200 cm, wobei der Innendurchmesser in jedem Fall kleiner als der Außendurchmesser ist.

In einer weiteren bevorzugten Ausführungsform der Anordnung weist die Abdeckung ein mit einer Plane bespanntes Gestänge auf.

Das Gestänge weist vorzugsweise eine Vielzahl von Stangen auf. Beispielsweise können Stangen speichenartig angeordnet sein und sich jeweils vom Rand der Belüftungsöffnung zum Rand der Bauteilöffnung erstrecken. Die Stangen sind vorzugsweise mit einer Steckverbindung am Rand der Bauteilöffnung und/oder am Rand der Belüftungsöffnung befestigt. Die Steckverbindungen sind vorzugsweise mit einem jeweiligen Splint gesichert. Beispielsweise kann ein jeweiliges Ende der Stangen durch ein entsprechendes Loch am Rand der Bauteilöffnung gesteckt und mit einem jeweiligen Splint gesichert werden. Durch die Steckverbindungen kann die Abdeckung leicht montiert und demontiert werden. Der Rand der Belüftungsöffnung kann insbesondere durch die Ringplatte gebildet sein. Insoweit kann die Ringplatte dazu dienen, das Gestänge zu halten. Das Gestänge ist mit einer Plane bespannt. Durch die Plane ist der Innenraum des Bauteils geschützt. Durch die Ausgestaltung der Abdeckung mit Plane und Gestänge ist die Abdeckung besonders leicht und entsprechend einfach zu transportieren, montieren und demontieren. Vorzugsweise hat die Abdeckung eine Masse im Bereich von 100 bis 300 kg.

Gemäß der Erfindung wird ein Verfahren zur Montage einer Offshore-Windenergieanlage vorgestellt. Das Verfahren umfasst:
a) Verankern eines hohlen Pfahls in einem Meeresgrund, so dass eine Bauteilöffnung an einer Stirnseite des Pfahls oberhalb einer Wasserlinie liegt, wobei die Bauteilöffnung durch eine Abdeckung verschlossen wird oder ist, und wobei ein Lüfter zum Belüften eines Innenraums des Pfahls über eine Belüftungsöffnung in der Abdeckung schwenkbar an der Abdeckung befestigt wird oder ist,
b) Abnehmen der Abdeckung,
c) Montieren einer Bauwerkstruktur auf dem Pfahl.

Der Pfahl des Offshore-Bauwerks stellt ein Bauteil im Sinne der beschriebenen Anordnung dar. Am Ende von Schritt a) liegt vorzugsweise eine wie beschrieben ausgebildete Anordnung vor. Die beschriebenen Vorteile und Merkmale der Anordnung sind insoweit auf das Verfahren anwendbar und übertragbar, und umgekehrt.

Das Verfahren dient dazu, ein Offshore-Bauwerk zu montieren. Das Offshore-Bauwerk ist vorzugsweise eine Offshore-Windenergieanlage. Denkbar ist es aber auch, dass das Verfahren zur Montage anderer Offshore-Bauwerke eingesetzt wird, die einen oder mehrere im Meeresgrund verankerte Pfähle als Gründungsstruktur haben. Beispielsweise kann es sich bei einem solchen Offshore-Bauwerk um eine Offshore-Plattform handeln. Im Falle von mehreren Pfählen werden die Schritte a) und b) entsprechend oft durchgeführt.

In Schritt a) wird ein Pfahl im Meeresgrund verankert. Am Ende von Schritt a) ist die Bauteilöffnung durch eine Abdeckung verschlossen. Dazu kann der Pfahl zuerst im Meeresgrund verankert werden und die Abdeckung kann anschließend angebracht werden. In dem Fall umfasst Schritt a), dass die Bauteilöffnung durch eine Abdeckung verschlossen wird. Das Verschließen der Öffnung ist also Teil des Schritts a) und insoweit Teil des Verfahrens. Alternativ kann der Pfahl mit vormontierter Abdeckung im Meeresgrund verankert werden. In dem Fall wird für Schritt a) ein Pfahl verwendet, bei dem die Bauteilöffnung durch eine Abdeckung verschlossen ist. Die Abdeckung kann beispielsweise in einem Hafen auf dem Pfahl montiert werden und der mit der Abdeckung versehen Pfahl kann dann zu seinem Bestimmungsort transportiert werden. Das Verschließen der Öffnung ist dabei nicht Teil des Verfahrens, sondern erfolgt bereits vor Beginn des Verfahrens. Weiterhin ist am Ende von Schritt a) ein Lüfter schwenkbar an der Abdeckung gehalten. Das kann dadurch erreicht werden, dass der Lüfter an der Abdeckung befestigt wird, wenn die Abdeckung bereits am Pfahl montiert ist. In dem Fall umfasst Schritt a), dass der Lüfter an der Abdeckung befestigt wird. Das Befestigen des Lüfters ist also Teil des Schritts a) und insoweit Teil des Verfahrens. Das ist möglich sowohl für den Fall, dass die Abdeckung nach dem Verankern des Pfahls im Meeresgrund am Pfahl befestigt wird, als auch für den Fall, dass ein Pfahl mit vormontierter Abdeckung ohne Lüfter verwendet wird. Alternativ kann eine Abdeckung mit vormontiertem Lüfter verwendet werden. In dem Fall wird Schritt a) mit einer Abdeckung durchgeführt, an welcher der Lüfter schwenkbar befestigt ist. Die insoweit vormontierte Abdeckung kann am Pfahl angebracht werden, nachdem dieser im Meeresgrund verankert ist. Alternativ kann ein Pfahl verwendet werden, an dem bereits eine vormontierte Abdeckung mit Lüfter vormontiert ist.

Nach Schritt a) ist der Innenraum des Pfahls durch die Abdeckung geschützt. In diesem Zustand kann der Pfahl so lange verbleiben, bis die Bauwerkstruktur auf diesem befestigt wird. Dazu wird die Abdeckung in Schritt b) abgenommen, beispielsweise mit einem Kran. Zwischen Schritt a) und Schritt b) vergeht vorzugsweise eine Wartezeit. Die Wartezeit beträgt vorzugsweise mindestens einen Tag, insbesondere mindestens einen Monat. Beispielsweise kann der Pfahl mit der Abdeckung überwintern.

In Schritt c) wird die Bauwerkstruktur auf dem Pfahl montiert. Die Bauwerkstruktur ist vorzugsweise eine Turmstruktur, insbesondere im Falle einer Offshore-Windenergieanlage. Im Falle einer Offshore-Windenergieanlage kann die Turmstruktur einen Turm, eine Gondel mit Generator und daran angebundene Rotorblätter umfassen. Der Turm kann unmittelbar auf dem Pfahl montiert werden. Alternativ kann der Turm über ein Zwischenelement, insbesondere ein sogenanntes Transition Piece, mit dem Pfahl verbunden werden.

In einer bevorzugten Ausführungsform des Verfahrens wird die Abdeckung in Schritt b) zerteilt und anschließend entsorgt.

Das Zerteilen der Abdeckung kann beispielsweise umfassen, dass die Plane der Abdeckung an mehreren Stellen durchtrennt wird. Beispielsweise kann die Plane in Segmente zerschnitten werden, die sich jeweils zwischen zwei benachbarten Stangen des Gestänges erstrecken. Weiterhin kann das Zerteilen der Abdeckung umfassen, dass ein Gestänge der Abdeckung demontiert wird.

Durch das Zerteilen der Abdeckung kann die Oberfläche der Abdeckung verkleinert werden, so dass die Abdeckung weniger Angriffsfläche für Wind bietet. Das erleichtert das Abnehmen der Abdeckung.

Die Teile der Abdeckung können in einem Bigbag gesammelt und so abtransportiert werden. In der vorliegenden Ausführungsform wird die Abdeckung nicht wiederverwendet, sondern entsorgt. Das erleichtert das Zerteilen der Abdeckung insoweit, als dass dabei die Abdeckung zerstört werden kann. Zudem ist es sinnvoll, die Abdeckung nur einmal zu verwenden. So kann die Abdeckung während des Einsatzes beschädigt werden, beispielsweise indem Wind das Gestänge verformt. Derartige Schäden zu erkennen und zu beheben kann aufwendig sein.

In einer weiteren bevorzugten Ausführungsform des Verfahrens wird zwischen den Schritten a) und b) eine Windenvorrichtung außerhalb der Abdeckung an einem Rand der Bauteilöffnung des Pfahls montiert und wird der Lüfter aus einer Betriebsstellung weggeschwenkt, so dass der Innenraum des Pfahls über die Belüftungsöffnung in der Abdeckung für die Windenvorrichtung zugänglich wird.

Aufgrund der Schwenkbarkeit des Lüfters ist der Innenraum des Pfahls besonders gut zugänglich. In der vorliegenden Ausführungsform wird dieser Umstand mit einer Windenvorrichtung ausgenutzt. Unter einer Windenvorrichtung ist eine Vorrichtung zu verstehen, die neben einer Winde auch Befestigungsmittel aufweist, über welche die Winde an dem Pfahl befestigt werden kann. Die Windenvorrichtung wird am Rand der Bauteilöffnung des Pfahls montiert, also an der Stirnseite des Pfahls, welche oberhalb das Wasserlinie liegt. Die Windenvorrichtung ist bei normalem Wasserstand außerhalb des Wassers angeordnet. Die Befestigungsmittel umfassen vorzugsweise ein Gestell mit drei oder mehr Beinen, welche am Rand der Bauteilöffnung befestigt werden.

Mit der Windenvorrichtung können Lasten innerhalb des Innenraums des Pfahls bewegt werden, insbesondere nach oben oder unten. Unter Zuhilfenahme der Windenvorrichtung kann beispielsweise eine Mittelspannungsschaltung innerhalb des Pfahls montiert werden. Vor Schritt b) wird die Windenvorrichtung vorzugsweise wieder demontiert.

In einer weiteren bevorzugten Ausführungsform des Verfahrens wird die Windenvorrichtung zwischen den Schritten a) und b) zum cable-pull-in verwendet.

Der von einer Offshore-Windenergieanlage erzeugte Strom kann über ein am Meeresgrund verlegtes Kabel abgegeben werden. Bei der Montage der Offshore-Windenergieanlage wird dieses Kabel angeschlossen. Dazu kann das Kabel durch eine unterhalb der Wasserlinie liegendes Loch in der Mantelwand des Pfahls geführt werden. Innerhalb des Pfahls kann das Kabel anschließend hochgezogen und angeschlossen werden. Dieser Prozess wird als cable-pull-in bezeichnet. In der vorliegenden Ausführungsform wird die Windenvorrichtung dafür genutzt. Insoweit lassen sich die zuvor beschriebenen Vorteile beim cable-pull-in erreichen. Insbesondere ist es nicht erforderlich, die Abdeckung für den cable-pull-in abzunehmen. Stattdessen genügt es, den Lüfter wegzuschwenken. Durch die mittige Anordnung der Belüftungsöffnung kann das Kabel zentral im Pfahl hochgezogen und angeschlossen werden. Das ist vorteilhaft, weil das Kabel so von der Mantelwand des Pfahls ferngehalten werden kann.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1a bis 1c:: drei Stadien eines erfindungsgemäßen Verfahrens zur Montage einer Offshore-Windenergieanlage,
- Fig. 2a:: eine Seitenansicht eines Teils der Anordnung aus Fig. 1a,
- Fig. 2b:: eine Draufsicht des in Fig. 2a Gezeigten.
- Fig. 3a:: eine Seitenansicht eines Teils der Anordnung aus Fig. 1a in einem wei teren Zustand,
- Fig. 3b:: eine Draufsicht des in Fig. 3a Gezeigten.

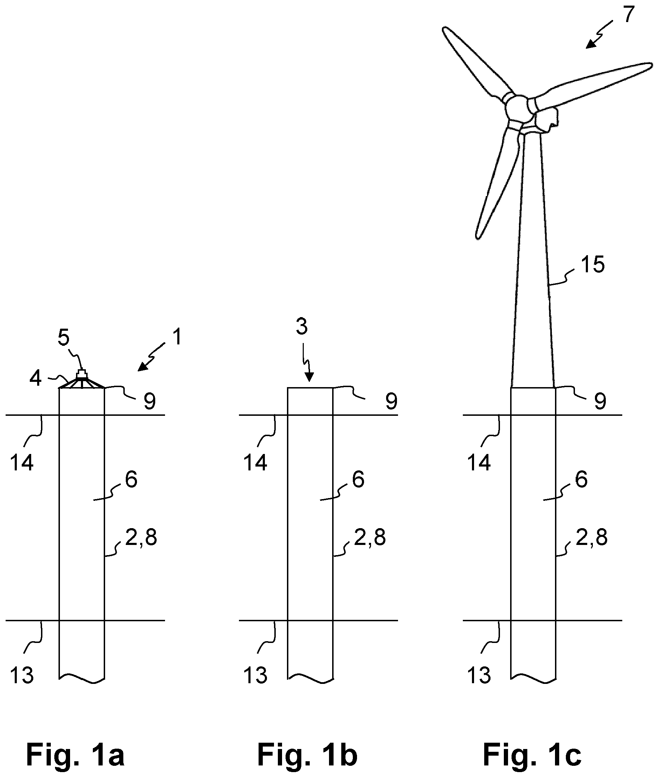

Fig. 1 veranschaulicht ein Verfahren zur Montage einer Offshore-Windenergieanlage als einem Offshore-Bauwerk 7. Fig. 1a veranschaulicht einen Schritt a), in dem ein hohler Pfahl 8 in einem Meeresgrund 13 verankert wird, so dass eine (in Fig. 1b gezeigte) Bauteilöffnung 3 an einer Stirnseite 9 des Pfahls 8 oberhalb einer Wasserlinie 14 liegt. Der Pfahl 8 ist ein Bauteil 2. Die Bauteilöffnung 3 wird durch eine Abdeckung 4 verschlossen, wobei ein Lüfter 5 zum Belüften eines Innenraums 6 des Pfahls 8 schwenkbar an der Abdeckung 4 befestigt wird. Durch die Abdeckung 4 ist der Innenraum 6 des Pfahls 8 geschützt. Am Ende von Schritt a) liegt die in Fig. 1a gezeigte Anordnung 1 vor. Die Anordnung 1 umfasst den Pfahl 8, die Abdeckung 4 und den Lüfter 5.

Fig. 1b veranschaulicht einen Schritt b), in dem die Abdeckung 4 abgenommen wird. Dazu kann die Abdeckung 4 zerteilt und anschließend entsorgt werden.

Fig. 1c veranschaulicht einen Schritt c), in dem eine Turmstruktur als eine Bauwerkstruktur 15 auf dem Pfahl 8 montiert wird. Dadurch wird die Anordnung 1 zu einem Offshore-Bauwerk 7. Die zuvor bestehende Bauteilöffnung 3 ist durch die Turmstruktur dauerhaft verschlossen. Der Pfahl 8 ist eine in dem Meeresgrund 13 verankerte Gründungsstruktur für das Offshore-Bauwerk 7.

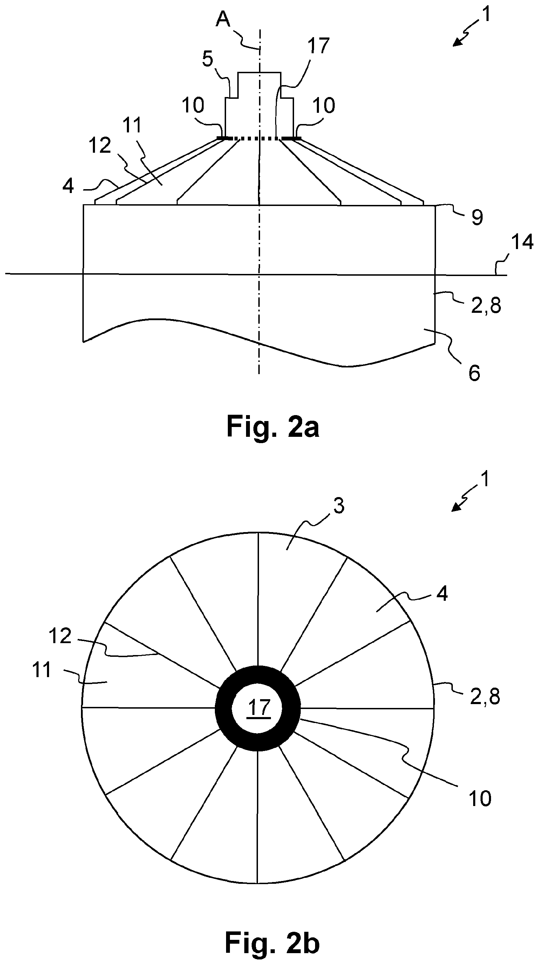

Fig. 2a zeigt eine Vergrößerung eines Teils von Fig. 1a. Gezeigt ist der Pfahl 8 als das Bauteil 2 mit der Stirnseite 9, welche oberhalb der Wasserlinie 14 angeordnet ist. An der Stirnseite 9 weist der Pfahl 8 die (in Fig. 1b und 2b gezeigte) Bauteilöffnung 3 auf, welche durch die Abdeckung 4 verschlossen ist. Die Abdeckung 4 weist ein mit einer Plane 11 bespanntes Gestänge 12 auf. Beispielhaft ist nur ein Planensegment mit Bezugszeichen 11 und eine Stange mit Bezugszeichen 12 versehen. Der Lüfter 5 ist auf einer Achse A der Bauteilöffnung 3 angeordnet. Die Achse A ist zugleich eine Achse des Bauteils 2. Die Abdeckung 4 weist eine Ringplatte 10 auf. Zentral in der Ringplatte 10 ist eine Belüftungsöffnung 17 ausgebildet. Über die Belüftungsöffnung 17 in der Abdeckung 4 kann der Innenraum 6 des Pfahls 8 mit dem Lüfter 5 belüftet werden. Das ist in der in Fig. 2a gezeigten Betriebsstellung des Lüfters 5 möglich.

Fig. 2b zeigt eine Draufsicht des in Fig. 2a Gezeigten. Zu erkennen ist die Abdeckung 4 mit der Plane 11 und dem Gestänge 12. Auch hier ist beispielhaft nur ein Planensegment mit Bezugszeichen 11 und eine Stange mit Bezugszeichen 12 versehen. Die Belüftungsöffnung 17 ist zentral in der Ringplatte 10 ausgebildet. Eingezeichnet ist weiterhin die Bauteilöffnung 3. Diese erstreckt sich über die gesamte Stirnseite 9 des Pfahls 8, also in Fig. 2b über den gesamten mit Bezugszeichen 3 versehenen Kreis.

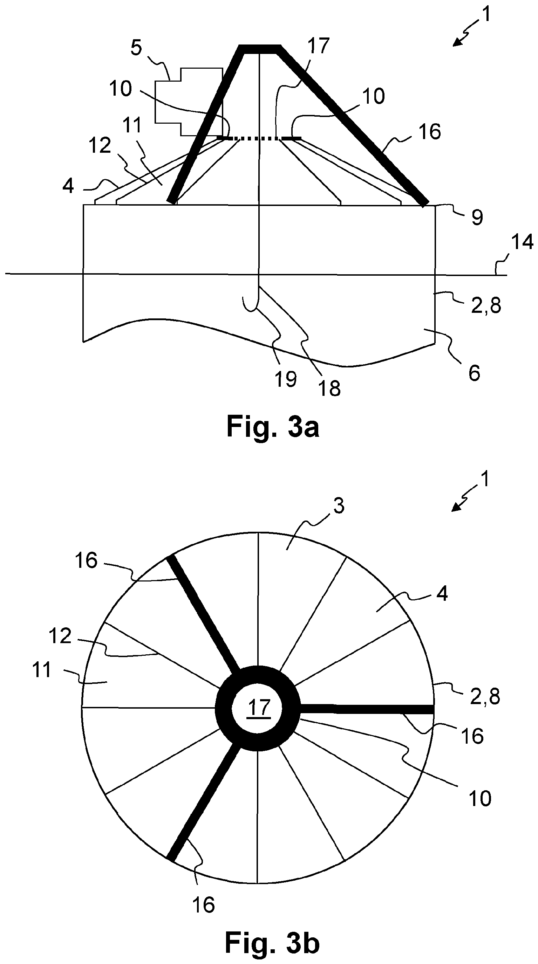

In Fig. 3a ist die Anordnung 1 aus Fig. 2a in einem weiteren Zustand gezeigt. In diesem ist der Lüfter 5 aus der in den Fig. 2a und 2b gezeigten Betriebsstellung weggeschwenkt. Zudem ist eine Windenvorrichtung 16 außerhalb der Abdeckung 4 an einem Rand der Bauteilöffnung 3 des Pfahls 8 montiert. Der Übersichtlichkeit halber ist die Achse A der Bauteilöffnung hier nicht eingezeichnet. Der Innenraum 6 des Pfahls 8 ist über die Belüftungsöffnung 17 in der Abdeckung 4 für die Windenvorrichtung 16 zugänglich. Das ist insoweit angedeutet, als dass ein Seil 18 der Windenvorrichtung 16 gezeigt ist, welches durch die Belüftungsöffnung 17 in den Innenraum 6 des Pfahls 8 geführt ist. Das Seil 18 ist an einer nicht gezeigten Winde der Windenvorrichtung 16 befestigt. Am anderen Ende des Seils 18 ist ein Haken 19 angedeutet, über den Lasten aufgenommen werden können. Die Windenvorrichtung 16 kann insbesondere zwischen den Schritten a) und b) zum cable-pull-in verwendet werden.

Fig. 3b zeigt eine Draufsicht des in Fig. 2a Gezeigten.

Durch die Abdeckung 4 kann die Bauteilöffnung 3 des Bauteils 2 verschlossen werden, so dass der Innenraum 6 des Bauteils 2 vor äußeren Einflüssen geschützt ist. Mit dem Lüfter 5 kann Schimmelbildung im Innenraum 6 des Bauteils 2 verhindert werden. Dadurch, dass der Lüfter 5 schwenkbar an der Abdeckung 4 gehalten ist, ist der Innenraum 6 des Bauteils 2 besonders gut zugänglich.

### Bezugszeichenliste

- 1: Anordnung
- 2: Bauteil
- 3: Bauteilöffnung
- 4: Abdeckung
- 5: Lüfter
- 6: Innenraum
- 7: Offshore-Bauwerk
- 8: Pfahl
- 9: Stirnseite
- 10: Ringplatte
- 11: Plane
- 12: Gestänge
- 13: Meeresgrund
- 14: Wasserlinie
- 15: Bauwerkstruktur
- 16: Windenvorrichtung
- 17: Belüftungsöffnung
- 18: Seil
- 19: Haken

- A: Achse

## Patentansprüche

1. Anordnung (1), umfassend:
- ein hohles Bauteil (2) mit einer Bauteilöffnung (3), wobei das Bauteil (2) ein Pfahl (8) ist, und wobei die Bauteilöffnung (3) an einer Stirnseite (9) des Pfahls (8) angeordnet ist,
- eine Abdeckung (4), durch welche die Bauteilöffnung (3) verschlossen ist, **dadurch gekennzeichnet, dass** ein Lüfter (5) zum Belüften eines Innenraums (6) des Bauteils (2) über eine Belüftungsöffnung (17) in der Abdeckung (4) angeordnet ist, wobei der Lüfter (5) schwenkbar an der Abdeckung (4) befestigt ist.

2. Anordnung (1) nach Anspruch 1, wobei das Bauteil (1) eine in einem Meeresgrund (13) verankerte Gründungsstruktur für ein Offshore-Bauwerk (7) ist.

3. Anordnung (1) nach einem der vorstehenden Ansprüche, wobei der Lüfter (5) in einer Betriebsstellung auf einer Achse (A) der Bauteilöffnung (3) angeordnet ist.

4. Anordnung (1) nach einem der vorstehenden Ansprüche, wobei die Abdeckung (4) eine Ringplatte (10) aufweist, an welcher der Lüfter (5) gehalten ist.

5. Anordnung (1) nach einem der vorstehenden Ansprüche, wobei die Abdeckung (4) ein mit einer Plane (11) bespanntes Gestänge (12) aufweist.

6. Verfahren zur Montage eines Offshore-Bauwerks (7), umfassend:
a) Verankern eines hohlen Pfahls (8) in einem Meeresgrund (13), so dass eine Bauteilöffnung (3) an einer Stirnseite (9) des Pfahls (8) oberhalb einer Wasserlinie (14) liegt, wobei die Bauteilöffnung (3) durch eine Abdeckung (4) verschlossen wird oder ist, und wobei ein Lüfter (5) zum Belüften eines Innenraums (6) des Pfahls (8) über eine Belüftungsöffnung (17) in der Abdeckung (4) schwenkbar an der Abdeckung (4) befestigt wird oder ist,
b) Abnehmen der Abdeckung (4),
c) Montieren einer Bauwerkstruktur (15) auf dem Pfahl (6).

7. Verfahren nach Anspruch 6, wobei die Abdeckung (4) in Schritt b) zerteilt und anschließend entsorgt wird.

8. Verfahren nach Anspruch 6 oder 7, wobei zwischen den Schritten a) und b) eine Windenvorrichtung (16) außerhalb der Abdeckung (4) an einem Rand der Bauteilöffnung (3) des Pfahls (8) montiert wird und der Lüfter (5) aus einer Betriebsstellung weggeschwenkt wird, so dass der Innenraum (6) des Pfahls (8) über die Belüftungsöffnung (17) in der Abdeckung (4) für die Windenvorrichtung (16) zugänglich wird.

9. Verfahren nach Anspruch 8, wobei die Windenvorrichtung (16) zwischen den Schritten a) und b) zum cable-pull-in verwendet wird.

## Claims

1. Arrangement (1), comprising:
- a hollow component (2) with a component opening (3), the component (2) being a pile (8), and the component opening (3) being arranged on an end side (9) of the pile (8),
- a covering (4), by way of which the component opening (3) is closed,
**characterized in that** a fan (5) for ventilating an interior space (6) of the component (2) via a ventilation opening (17) is arranged in the covering (4), the fan (5) being fastened pivotably to the covering (4).

2. Arrangement (1) according to Claim 1, wherein the component (1) is a foundation structure, anchored in a seabed (13), for an offshore construction (7).

3. Arrangement (1) according to either of the preceding claims, wherein the fan (5) is arranged in an operating position on an axis (A) of the component opening (3).

4. Arrangement (1) according to one of the preceding claims, wherein the covering (4) has a ring plate (10), on which the fan (5) is held.

5. Arrangement (1) according to one of the preceding claims, wherein the covering (4) has a rod assembly (12) which is covered with a tarpaulin (11).

6. Method for assembling an offshore construction (7), comprising:
a) anchoring a hollow pile (8) in a seabed (13), with the result that a component opening (3) on an end side (9) of the pile (8) lies above a waterline (14), the component opening (3) being closed by way of a covering (4), and a fan (5) for ventilating an interior space (6) of the pile (8) via a ventilation opening (17) in the covering (4) being fastened pivotably to the covering (4),
b) removing the covering (4),
c) mounting a construction structure (15) on the pile (6) .

7. Method according to Claim 6, wherein the covering (4) is split in step b) and subsequently disposed of.

8. Method according to Claim 6 or 7, wherein a winch apparatus (16) is mounted outside the covering (4) on an edge of the component opening (3) of the pile (8) between steps a) and b), and the fan (5) being pivoted away out of an operating position, with the result that the interior space (6) of the pile (8) becomes accessible for the winch apparatus (16) via the ventilation opening (17) in the covering (4).

9. Method according to Claim 8, wherein the winch apparatus (16) is used to pull in the cable between steps a) and b) .

## Revendications

1. Agencement (1), comprenant :
- un composant creux (2) avec une ouverture de composant (3), le composant (2) étant un pieu (8), et l'ouverture de composant (3) étant agencée sur un côté frontal (9) du pieu (8),
- un couvercle (4), par lequel l'ouverture de composant (3) est fermée,
**caractérisé en ce qu'**un ventilateur (5) destiné à ventiler un espace intérieur (6) du composant (2) est agencé dans le couvercle (4) par l'intermédiaire d'une ouverture de ventilation (17), le ventilateur (5) étant fixé de manière pivotante au couvercle (4).

2. Agencement (1) selon la revendication 1, dans lequel le composant (1) est une structure de fondation ancrée dans un fond marin (13) pour une construction offshore (7) .

3. Agencement (1) selon l'une quelconque des revendications précédentes, dans lequel le ventilateur (5) est agencé dans une position de fonctionnement sur un axe (A) de l'ouverture de composant (3).

4. Agencement (1) selon l'une quelconque des revendications précédentes, dans lequel le couvercle (4) présente une plaque annulaire (10) sur laquelle le ventilateur (5) est maintenu.

5. Agencement (1) selon l'une quelconque des revendications précédentes, dans lequel le couvercle (4) présente une tringlerie (12) recouverte d'une bâche (11).

6. Procédé de montage d'une construction offshore (7), comprenant :
a) l'ancrage d'un pieu creux (8) dans un fond marin (13) de telle sorte qu'une ouverture de composant (3) sur un côté frontal (9) du pieu (8) se situe au-dessus d'une ligne d'eau (14), dans lequel l'ouverture de composant (3) est ou sera fermée par un couvercle (4), et dans lequel un ventilateur (5) destiné à ventiler un espace intérieur (6) du pieu (8) est ou sera fixé de manière pivotante au couvercle (4) par l'intermédiaire d'une ouverture de ventilation (17) dans le couvercle (4),
b) le retrait du couvercle (4),
c) le montage d'une structure de construction (15) sur le pieu (6).

7. Procédé selon la revendication 6, dans lequel le couvercle (4) est découpé à l'étape b) et ensuite mis au rebut.

8. Procédé selon la revendication 6 ou 7, dans lequel, entre les étapes a) et b), un dispositif de treuillage (16) est monté à l'extérieur du couvercle (4) sur un bord de l'ouverture de composant (3) du pieu (8) et le ventilateur (5) est pivoté à partir d'une position de fonctionnement de telle sorte que l'espace intérieur (6) du pieu (8) est accessible au dispositif de treuillage (16) par l'intermédiaire de l'ouverture de ventilation (17) dans le couvercle (4).

9. Procédé selon la revendication 8, dans lequel le dispositif de treuillage (16) est utilisé pour l'enroulement du câble entre les étapes a) et b).
